# EUROPÄISCHE PATENTSCHRIFT

(11) **EP 3 458 370 B1**
(45) Veröffentlichungstag und Bekanntmachung des Hinweises auf die Patenterteilung: **27.05.2020**
(21) Anmeldenummer: 17764770.8
(22) Anmeldetag: 23.08.2017
(51) Int. Cl.: B29C 49/48, B65D 1/42, B29C 49/04

(54) **KUNSTSTOFF-FLASCHE MIT SICH KREUZENDEN ZUGBÄNDERN**
PLASTIC BOTTLE WITH INTERSECTING TENSION STRAPS
BOUTEILLE EN MATIÈRE PLASTIQUE MUNIE DE BANDES DE TENSION EN INTERSECTION

(30) Priorität: 23.08.2016 DE 102016115646
(43) Veröffentlichungstag der Anmeldung: 27.03.2019
(73) Patentinhaber: Krones AG, 93073 Neutraubling (DE)
(72) Erfinder: CASPER, Mario, 93073 Neutraubling (DE); HUBER, Milena, 93073 Neutraubling (DE)
(74) Vertreter: Bittner, Bernhard
(86) Internationale Anmeldenummer: PCT/EP2017/071252
(87) Internationale Veröffentlichungsnummer: WO 2018/037052

(56) Entgegenhaltungen:
- WO-A2-2009/039595
- CN-A- 105 460 340
- FR-A1- 2 907 763
- US-A1- 2009 301 991

## Beschreibung

Die vorliegende Erfindung bezieht sich auf ein Kunststoff-Behältnis und insbesondere ein Kunststoff-Behältnis wie eine Kunststoff-Flasche für Getränke. Derartige Behältnisse sind üblicher Weise aus Kunststoffen wie PET hergestellt. PET-Behältnisse können sich durch verschiedene äußere Einflüsse, wie zum Beispiel durch Linienkomponenten in der Abfülllinie verformen. Besonders betroffen sind hiervon sehr leichte Kunststoff-Behältnisse. Auch Behältnisse, welche einem Innendruck unterworfen sind, beispielsweise erzeugt durch Stickstoff oder im Falle einer Karbonisierung des Füllgutes sind von Verformung betroffen. Dieser Innendruck kann selbst - gerade bei sehr leichten Behältnissen - eine deformierende Auswirkung auf das Behältnis haben.

Seit einiger Zeit wird versucht, diese achsiale wie auch radiale Aufweitung und/oder der Deformierung durch den Einsatz von geeigneten Rillengeometrien zu minimieren bzw. einzuschränken. Dies wird umso schwieriger, je leichter das Behältnis ausgelegt ist. Zwar wäre ein Behältnis ganz ohne derartige Rillen unter Innendruck die beste Wahl, ein derartiges Behältnis hätte jedoch nach dem Öffnen, also nach der Druckentlastung, nur eine sehr geringe Griffstabilität.

Trotz jahrelanger Optimierung der Rillengeometrien können diese eine achsiale und zugleich radiale Aufweitung der PET-Behältnisse unter Innendruck nicht vollständig zurückhalten. Beispielsweise können Querrillen zwar die radiale Aufweitung beschränken, begünstigen aber zugleich ein achsiales Höhenwachstum. Daneben haben derartige Rillen, die unter Innendruck glattgezogen werden, nach dem Öffnen der Behältnisse keine Steifigkeit mehr und bringen deshalb nur relativ wenig Griffstabilität.

Kunststoff-Behältnisse mit den Merkmalen des Oberbegriffs des Anspruchs 1 sind aus WO2009/039595, FR2907763, CN105460340 und US 2009/301991 bekannt.

Der vorliegenden Erfindung liegt daher die Aufgabe zugrunde, ein Kunststoff-Behältnis zur Verfügung zu stellen, welches eine höhere Stabilität in unterschiedlichen Richtungen, beispielsweise radialen und achsialen Richtungen, bietet. Diese Aufgabe wird erfindungsgemäß durch ein Behältnis nach Anspruch 1 erreicht. Vorteilhafte Ausführungsformen und Weiterbildungen sind Gegenstand der Unteransprüche.

Ein erfindungsgemäßes Kunststoff-Behältnis weist einen Bodenbereich auf, sowie einen sich in einer Längsrichtung des Kunststoff-Behältnisses an diesen Bodenbereich anschließenden Grundkörper, wobei dieser Grundkörper eine in einer Umfangsrichtung des Kunststoff-Behältnisses vollständig umlaufende Wandung aufweist. Weiterhin weist das Kunststoff-Behältnis einen sich in der Längsrichtung an diesen Grundkörper zumindest mittelbar anschließenden Mündungsbereich mit einer Behältnismündung auf.

Diese umlaufende Wandung (des Grundkörpers) weist wenigstens eine erste sich in einer ersten Richtung erstreckende Nut und/oder Erhebung und wenigstens eine zweite sich in einer zweiten Richtung erstreckende Nut und/oder Erhebung auf.

Erfindungsgemäß kreuzen sich die erste Nut und/oder Erhebung und die zweite Nut und/oder Erhebung in wenigstens einem ersten in der umlaufenden Wandung ausgebildeten Kreuzungsbereich.

Dies bedeutet, dass die besagten Nuten und/oder Erhebungen zumindest abschnittsweise nicht parallel sind und sich daher in einem bestimmten Kreuzungsbereich kreuzen können. Vorteilhaft erstrecken sich daher die Nuten wenigstens abschnittsweise in unterschiedlichen Richtungen. Unter dem Begriff des Kreuzens wird nicht notwendiger Weise ein Kreuzen und einem Winkel von 90° verstanden, sondern wie unten genauer beschrieben, kann ein entsprechender Kreuzungswinkel auch von 90° abweichen.

Der Begriff der Nut und/oder Erhebung ist dabei gegenüber einem Normalniveau der Umfangswandung definiert. So wird unter einer Nut ein geometrisches Gebilde verstanden, welches sich bezüglich der Umfangswandung nach Innen erstreckt und unter einer Erhebung ein geometrisches Gebilde, welches sich bezogen auf die Flasche, gegenüber der Umfangswandung nach Außen erstreckt.

Bei einer bevorzugten Ausführungsform fungiert die besagte Nut oder Erhebung als sogenanntes Zugband. Dieses Zugband dient dazu, Belastungen insbesondere auch in der Richtung dieses Zugbands abzufangen. Bei einer weiteren vorteilhaften Ausführungsform ist die besagte Nut durchgehend ausgebildet.

Es wäre auch möglich, dass es sich um eine unterbrochene Nut handelt, beispielsweise um eine Vielzahl von Ausnehmungen, welche sich entlang einer vorgegebenen Linie erstrecken. Dies bedeutet, dass im Rahmen der vorliegenden Anmeldung die Nut nicht zwangsläufig eine durchgehende Nut sein muss, sondern auch definiert sein kann durch eine Abfolge von Ausnehmungen bzw. Mulden, die sich entlang einer vorgegebenen Richtung erstrecken.

Daneben könnten auch Gestaltungen vorgesehen sein, beispielsweise linienförmige Nuten, welche jeweils unterbrochen sind in der Art einer gestrichelten oder auch strichpunktierten Linie. Bei einer weiteren vorteilhaften Ausführungsform dient der besagte Bodenbereich auch als Stellfläche des Behältnisses. Bevorzugt sind die Nuten und/oder Erhebungen durch einen Blasformvorgang in das Behältnis bzw. dessen Umfangswandung eingebracht. Bevorzugt handelt es sich bei dem Behältnis um ein blasgeformtes Behältnis und insbesondere um ein Behältnis, welches durch einen Streckblasvorgang erzeugt wurde.

Der Vorteil der erfindungsgemäßen Ausgestaltung besteht darin, dass stabilisierende Zugbandstrukturen entstehen, welche zugleich eine achsiale und eine radiale Aufweitung der PET-Behältnisse unter Innendruck zurückhalten können. Dabei müssen jedoch diese Einschränkungen nicht in alle Richtungen gleichmäßig erfolgen, insgesamt ergibt sich jedoch ein stabiles Behältnis.

Bevorzugt definieren sich diese Zugbandstrukturen durch einen oder mehrere Rillengründe, das heißt, das Verhältnis aus Tiefe und Höhe, die oberhalb und unterhalb des Behältnisquerschnitts liegen können und/oder die im Querschnitt n-eckig aber mindestens 3-eckig und maximal ∞-eckig (das heißt, kreisförmig oder oval) sein können. Weiterhin können diese Nuten in ihren horizontalen Querschnitten variabel über die Höhe des Grundkörpers bzw. des Behältnisse in verschiedenen vertikalen Schnitten verlaufen.

Dies bedeutet, dass die besagte Nut auch keine einheitliche Tiefe und einen einheitlichen Querschnitt haben muss, sondern sich dieser auch in einer Erstreckungsrichtung der Nut ändern kann. Auch müssen die besagten Nuten an ihren Ecken nicht scharfkantig ausgeführt sein, sondern können auch gerundet ausgeführt sein. Vorteilhaft sind mindestens zwei aber auch bis zu unendlich viele Leitkurven gebildet. Vorteilhaft weisen die Nuten eine vorgegebene Steigung bezogen auf die Umfangrichtung des Behältnisses auf. Diese Steigung muss dabei nicht notwendiger Weise konstant sein.

Weiterhin weist bevorzugt die erste Nut eine positive Steigung auf und die zweite Nut eine negative Steigung. Auf diese Weise kommt es zu mindestens einem, bevorzugt mindestens zwei Schnittpunkten bzw. Schnittbereichen dieser besagten Nuten (hier als Kreuzungsbereiche bezeichnet). Dabei ist es denkbar, dass die beiden Nuten auch gegenläufig ausgebildet sein können, um so eine Selbsthemmung zu erreichen. Erfindungsgemäß entspringen die Nuten aus dem Bodenbereich und verlaufen möglicherweise über die gesamte oder einen Teil der Behältnishöhe. Die Nuten dienen als Zugband, das sich beginnend im Bodenbereich bis in den Körperbereich hinein erstreckt. Auch ist es möglich, dass die besagten Nuten unterschiedlich oder gleichlang sind.

Daneben können die Nuten bzw. die Rillen einen Öffnungswinkel aufweisen, der sich symmetrisch oder asymmetrisch von einer neutralen Faser einer Leitkurve entfernen kann oder aber an der Leitkurve in einem definierten Abstand angebunden sein kann und beispielsweise in einem variablen Winkel zwischen 10° und 160° ausgeführt sein kann.

Die vorliegende Erfindung erlaubt es damit, dass im Prinzip jeder Behältnisquerschnitt mit den unterschiedlichsten Formen bzw. Shapes (das heißt, vertikalen Schnitten) realisiert werden kann, da die äußere Form von einer Art Extroskelett oder Introskelett (definiert durch die Zugbandstrukturen bzw. die Nuten) gehalten wird. Bevorzugt verwendet man dabei das Selbsthemmungsprinzip gegenläufiger Strukturen. Bevorzugt sind auch Freiformflächen vorgesehen. In Kombination mit diesen überspannten Freiformflächen, die sich bevorzugt zwischen stabilisierenden Strukturen befinden, können zusätzlich sehr zugstabile Oberflächen mit geringem Materialeinsatz realisiert werden. Auf diese Weise können insbesondere sehr leichte aber für den Innendruck sehr stabile Behältnisse realisiert werden.

Bevorzugt weist der Grundkörper des Behältnisses eine Wandungsstärke auf, die größer ist als 0,01 mm, bevorzugt größer als 0,03 mm, und bevorzugt größer als 0,05 mm. Bei einer weiteren bevorzugten Ausführungsform weist der Grundkörper des Behältnisses eine Wandungsstärke auf, die kleiner ist als 0,5 mm, bevorzugt kleiner als 0,4 mm und bevorzugt kleiner als 0,3 mm. Die hier beschriebene Erfindung ist insbesondere für Behältnisse mit diesen genannten Wandungsstärken besonders geeignet, da bei derartigen Wandungsstärken sich einerseits große Verbesserungen der Stabilität des Behältnisses durch die beschriebene Struktur der Nuten und/oder Erhebungen ergeben und sich andererseits bei diesen Wandstärken auch die besagten Nuten und/oder Erhebungen besonders günstig fertigen lassen.

Bevorzugt ist eine Vielzahl von Nuten und/oder Erhebungen vorgesehen, welche insgesamt auch eine Vielzahl von Kreuzungsbereichen in der Umfangswand ausbilden. Durch diese Vielzahl von Nuten und/oder Erhebungen und die jeweiligen Kreuzungspunkte wird bevorzugt in der Umfangswandung des Behältnisses ein stabilisierendes Netz ausgebildet.

Bei einer weiteren vorteilhaften Ausführungsform weist wenigstens eine Nut und/oder Erhebung einen durch den Kreuzungsbereich verlaufenden Abschnitt auf und dieser Abschnitt erstreckt sich im Wesentlichen geradlinig. Bevorzugt weist auch die andere Nut und/oder Ergebung einen durch den Kreuzungsbereich verlaufenden Abschnitt auf und auch dieser Abschnitt erstreckt sich bevorzugt im Wesentlichen geradlinig. Gemeint ist hierbei eine geradlinige Projektion bezogen auf die Umfangswandung des Behältnisses.

Falls also beispielsweise in einer Radialrichtung des Behältnisses eine Projektion auf den besagten geradlinigen Abschnitt vorgenommen wird, wird sich dieser als im Wesentlichen geradlinige Linie ergeben. Unter "im Wesentlichen geradlinig" werden auch Linien verstanden, welche einen endlichen jedoch sehr hohen Krümmungsradius aufweisen, beispielsweise einen Krümmungsradius von mehr als 20 cm, bevorzugt mehr als 30 cm, und bevorzugt mehr als 50 cm. Auf diese Weise wird gerade in den Kreuzungsbereichen ein sehr hohes Maß an Stabilität erreicht.

Bei einer weiteren vorteilhaften Ausführungsform kreuzen sich die erste Nut und/oder Erhebung und die zweite Nut und/oder Erhebung in einem Kreuzungsbereich unter einem vorgegebenen Kreuzungswinkel α und dieser Kreuzungswinkel ist größer als 0,1°, bevorzugt größer als 10°, bevorzugt größer als 20° und besonders bevorzugt größer als 30°. Besonders bevorzugt ist der besagte Winkel größer als 40° und bevorzugt größer als 50°.

Unter diesem Kreuzungswinkel wird hierbei der jeweils kleinere Winkel, der sich bei der Kreuzung von zwei Geraden ergibt, verstanden. Damit kann dieser Winkel maximal eine Größe von 90° haben. Besonders bevorzugt ist dieser Winkel größer als 60°, bevorzugt größer als 70° und bevorzugt größer als 80°.
Bei einer weiteren vorteilhaften Ausführungsform ist die Nut und/oder Erhebung zumindest in dem Kreuzungsbereich durchgängig und/oder in den Kreuzungsbereich einlaufend ausgebildet. Dies bedeutet, dass die Nut und/oder Erhebung zumindest in dem Bereich der Kreuzung nicht unterbrochen ist (bzw. im Wesentlichen nur durch den Querschnitt der kreuzenden Nut und/oder Erhebung unterbrochen ist. Bei dieser Ausgestaltung erstreckt sich das Profil dieser einlaufenden Nut und/oder Erhebung im Wesentlichen bis an den Rand der jeweiligen kreuzenden Nut und/oder Erhebung.

Vorteilhaft sind beide Nuten und/oder Erhebungen in dem besagten Kreuzungsbereich durchgängig und/oder in den Kreuzungsbereich einlaufend ausgebildet. Auf diese Weise wird auch gerade in dem Kreuzungsbereich eine höhere Stabilität erreicht.

Allerdings ist es auch möglich, dass sich eine Gestalt und/oder ein Querschnitt der Nut beim Einlaufen in den Kreuzungsbereich ändert, beispielsweise vergrößert. So kann beispielsweise die einlaufende Nut einen gewissen Querschnitt aufweisen, der sich in dem Kreuzungsbereich vergrößert.

Bei einer weiteren vorteilhaften Ausführungsform weist wenigstens eine Nut und/oder Erhebung einen Öffnungswinkel von mehr als 10°, bevorzugt von mehr als 20°, bevorzugt von mehr als 30°, bevorzugt von mehr als 40°, besonders bevorzugt von mehr als 50°, und besonders bevorzugt von mehr als 60° auf. Unter dem Öffnungswinkel wird dabei ein Winkel verstanden, der sich aus einer geometrischen Verlängerung zweier Nutbegrenzungswandungen an deren Schnittpunkt ergibt.

Bei einer weiteren voreilhaften Ausführungsform weist wenigstens eine Nut und/oder Ergebung einen Öffnungswinkel von weniger als 170°, bevorzugt von weniger als 150°, bevorzugt von weniger als 110°, besonders bevorzugt von weniger als 100°, bevorzugt von weniger als 90°, und besonders bevorzugt von weniger als 80° auf.

Dabei ist es weiterhin denkbar, dass Begrenzungswandungen dieser Nut im Wesentlichen geradlinig ausgebildet sind.

Bei einer weiteren bevorzugten Ausführungsform weist wenigstens eine Nut und/oder Erhebung einen geradlinig verlaufenden Nutgrund auf. Dabei ist es möglich, dass dieser geradlinige Nutgrund über gekrümmte Ecken bzw. Kanten in Seitenwandungen der besagten Nut übergeht. Bei einer weiteren vorteilhaften Ausführungsform weist die Nut einen trapezförmigen Querschnitt auf. Bevorzugt können dabei die Ecken, in denen der Nutgrund in die Seitenwandungen der Nut übergeht, einen Krümmungsradius in einen Bereich von 0,2 mm bis 0,5 mm aufweisen.

Bei einer weiteren vorteilhaften Ausführungsform weist das Kunststoff-Behältnis wenigstens eine weitere Nut und/oder Erhebung in der Wandung auf, welche wenigsten einen Kreuzungsbereich mit der ersten und/oder der zweiten Nut und/oder Erhebung ausbildet.

Bei einer weiteren vorteilhaften Ausführungsform ist eine Vielzahl von derartigen Nuten und/oder Erhebungen vorgesehen, welche sich - bevorzugt gleichmäßig - um den Umfang des Behältnisses erstrecken. Auf diese Weise wird auch eine Vielzahl von Kreuzungspunkten zwischen den einzelnen Nuten und/oder Erhebungen gebildet. Insgesamt entsteht so eine stabile Skelettstruktur für das Behältnis.

Bei einer weiteren vorteilhaften Ausführungsform erstreckt sich wenigstens eine Nut und/oder Erhebung wenigstens abschnittweise spiralförmig um die Längsrichtung des Behältnisses. Bevorzugt erstrecken sich sowohl die erste als auch die zweite Nut im Wesentlichen spiralförmig um die Längsrichtung bzw. um den Grundkörper des Behältnisses. Vorteilhaft erstrecken sich die erste und die zweite Nut zwar jeweils spiralförmig in Umfangsrichtung um das Behältnis jedoch mit unterschiedlichen Steigungen. Auf diese Weise können insgesamt Kreuzungsbereiche zwischen den einzelnen Nuten oder Erhebungen erreicht werden.

Bei einer weiteren vorteilhaften Ausführungsform weisen diese Spiralen, wie oben erwähnt, eine konstante Steigung auf.

Vorteilhaft ist eine erste Gruppe von ersten Nuten vorgesehen, die sich bevorzugt parallel zueinander erstrecken und auch eine zweite Gruppe von zweiten Nuten, die bevorzugt ebenfalls parallel zueinander sind. Diese ersten und zweiten Nuten bilden auf diese Weise eine Vielzahl von Kreuzungsbereichen aus.

Bei einer weiteren vorteilhaften Ausführungsform ist wenigstens ein Kreuzungsbereich als Mulde ausgebildet, in welcher die wenigstens eine Nut und/oder Erhebung einläuft. Dies bedeutet, dass bevorzugt in dem genannten Kreuzungsbereich die eigentliche Nut nicht vorhanden ist, sondern insbesondere gemeinsam mit der anderen Nut oder Erhebung in eine Mulde des Kreuzungspunktes übergeht. Vorteilhaft weist die Mulde ein kreuzförmiges Profil auf.

Erfindungsgemäß sind in dem Bodenbereich wenigstens zwei Bodennuten und/oder Bodenerhebungen angeordnet und wenigstens eine dieser Bodennuten und/oder Bodenerhebungen geht in einem Verzweigungsbereich in wenigstens zwei in der Umfangswandung ausgebildete Nuten und/oder Erhebungen über.

Bevorzugt werden durch die Nuten im Bodenbereich Standfüße des Behältnisses ausgebildet. Auch die Nuten im Bodenbereich dienen damit vorteilhaft als sogenannte Zugbänder.

Vorteilhaft ist auch dieser Verzweigungsbereich als Mulde ausgebildet und weist bevorzugt eine dreieckförmige Gestalt auf. Vorteilhaft ist der besagte Verzweigungsbereich im Bereich eines Außenumfangs des Behältnisses ausgebildet, das heißt nicht mehr in einem Bereich, in dem das Behältnis steht.

Bevorzugt weist wenigstens eine der Nuten und/oder Erhebungen im Anschluss an den Verzweigungsbereich einen gekrümmten Verlauf auf. Bevorzugt erstreckt sich die Bodennut und/oder Bodenerhebung in einem Abschnitt vor dem Verzweigungsbereich im Wesentlichen in der Längsrichtung des Behältnisses und in dem Bereich der Verzweigung verläuft wenigstens eine der besagten Nuten und/oder Erhebungen und verlaufen bevorzugt beide Nuten und/oder Erhebungen gekrümmt in Richtung der Mündung des Behältnisses weiter. Bevorzugt entspricht die Anzahl der Bodennuten, welche in die Verzweigungsbereiche hineinragen der Anzahl der Verzweigungsbereiche.

Bei einer weiteren bevorzugten Ausführungsform bilden die Nuten und/oder Erhebungen ein Skelett des Behältnisses.

Vorteilhaft weist das Behältnis wenigstens eine weitere Nut und/oder Erhebung und insbesondere eine umlaufende Nut in der Umfangswandung auf. Diese kann dabei mehrere der oben genannten Nuten oder Erhebungen schneiden, und kann auch die Kreuzungsbereiche schneiden.

Vorteilhaft ist diese umlaufende Nut in einem Griffbereich des Behältnisses ausgebildet. Bei einer weiteren vorteilhaften Ausführungsform sind auch mehrere (insbesondere bezogen auf die Längsrichtung des Behältnisses horizontale) Nuten vorgesehen.

Bei einer weiteren vorteilhaften Ausführungsform weist das Behältnis einen Schulterbereich auf, in dem sich ein Querschnitt des Behältnisses verjüngt und in dem der Grundkörper in den Mündungsbereich des Behältnisses übergeht.

Vorteilhaft ist an dem Grundkörper eine gerade Zahl von Nuten und/oder Erhebungen angeordnet. Dabei ist es möglich, dass jeder ersten Nut auch eine zweite Nut zugeordnet ist.

Die vorliegende Erfindung ist weiterhin auf eine Blasform zum Herstellen von Kunststoff-Behältnissen gerichtet. Diese Blasform weist ein erstes Seitenteil und ein zweites Seitenteil auf, welche in einem zusammengesetzten Zustand der Blasform wenigstens einen Hohlraum umschließen, innerhalb dessen Kunststoff-Vorformlinge zu den Kunststoff-Behältnissen ausgebildet werden können. Weiterhin weist diese Blasform eine formgebende Innenwandung zur Erzeugung der Wandung der Kunststoff-Behältnisse auf.

Erfindungsgemäß ist die formgebende Innenwandung der Blasform derart ausgebildet, dass sie zur Erzeugung eines Behältnisses der oben beschriebenen Art geeignet und bestimmt ist.

Bei einer weiteren vorteilhaften Ausführungsform weist die Blasform weiterhin ein Bodenteil auf. Auf diese Weise können die beiden Seitenteile und das Bodenteil den besagten Hohlraum zum Aufnehmen der Behältnisse umschließen.

Vorteilhaft weist die Wandung der Blasform inverse Erhebungen und/oder Nuten auf, welche die entsprechenden Nuten und/oder Erhebungen des Kunststoff-Behältnisses erzeugen.

Weitere Vorteile und Ausführungsformen ergeben sich aus den beigefügten Zeichnungen:
Darin zeigen:
- Fig. 1: eine Darstellung eines erfindungsgemäßen Kunststoff-Behältnisses;
- Fig. 2a: eine Darstellung zweier Nuten in einem Kreuzungsbereich;
- Fig. 2b: einen Querschnitt einer Nut;
- Fig. 3a: eine erläuternde Darstellung zur Veranschaulichung eines Verlaufs von Nuten;
- Fig. 3b: eine Darstellung zur Veranschaulichung eines Kreuzungsbereichs;
- Fig. 4: eine Draufsicht zur Veranschaulichung eines Nutenverlaufs;
- Fig. 5: eine Schnittdarstellung einer erfindungsgemäßen Blasform.

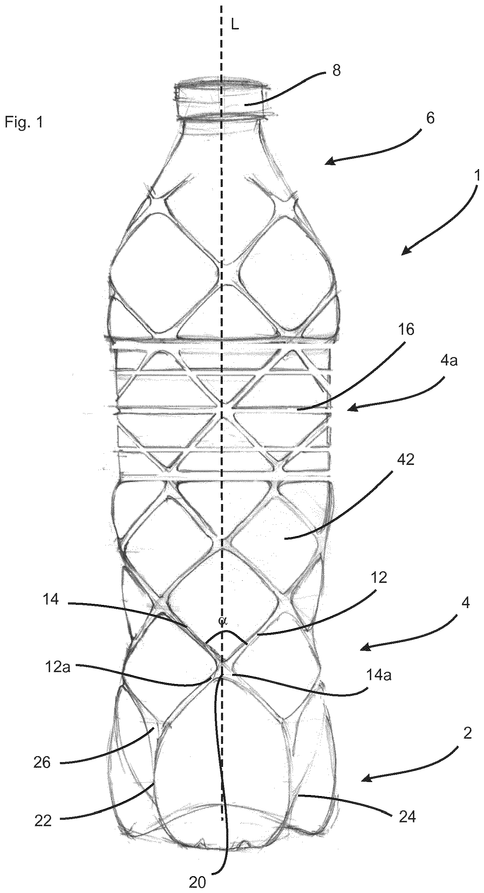

Fig. 1 zeigt eine Darstellung eines erfindungsgemäßen Kunststoff-Behältnisses 1. Dieses Kunststoff-Behältnis weist einen Bodenbereich 2 auf, der gleichzeitig auch als Standfläche dient. An diesen Bodenbereich 2 schließt sich der Grundkörper 4 an. An den Grundkörper wiederum schließt sich ein Mündungsbereich 6 an, der eine Mündung 8 aufweist. Das Bezugszeichen 12 kennzeichnet eine erste Nut, welche sich spiralförmig in der Wandung 42 des Behältnisses erstreckt. Das Bezugszeichen 14 kennzeichnet eine zweite Nut, welche sich ebenfalls spiralförmig in der Wandung 42 erstreckt. Diese beiden Nuten bilden gemeinsam einen Kreuzungsbereich 20 aus. Das Bezugszeichen L bezieht sich auf eine Längsrichtung des Behältnisses 1.

Die Bezugszeichen 12a und 14a beziehen sich auf Abschnitte der Nuten, welche gerade in den Kreuzungsbereich 20 einlaufen. Das Bezugszeichen α kennzeichnet einen Winkel, den die beiden Nuten miteinander einschließen. Bei der in Fig. 1 gezeigten Variante beträgt dieser Winkel ca. 90°. Dies ist auch eine bevorzugte Ausgestaltung, welche ein besonderes Maß an Stabilität des Behältnisses gewährleistet. Der Kreuzungsbereich ist hier als eine Mulde ausgebildet, in welche die beiden Nuten 12 und 14 einlaufen. In diesem Bereich, in dem die Nuten einlaufen, erweitern sich deren Querschnitte.

Das Bezugszeichen 22 und 24 kennzeichnen Bodennuten bzw. ein Zugbänder im Bereich des Bodens 2. Dieses Zugband 22 führt ebenfalls in der Art einer Nut zu einem Verzweigungspunkt bw. Verzweigungsbereich 26. An diesem Verzweigungspunkt 26 geht sowohl eine erste Nut 12 ab, als auch eine zweite Nut 14.

Das Bezugszeichen 16 kennzeichnet eine horizontale und umlaufende Nut, die in einem Griffbereich 4a des Behältnisses angeordnet ist. Diese Nut erstreckt sich geschlossen umlaufend um die Wandung 42 des Behältnisses 1.

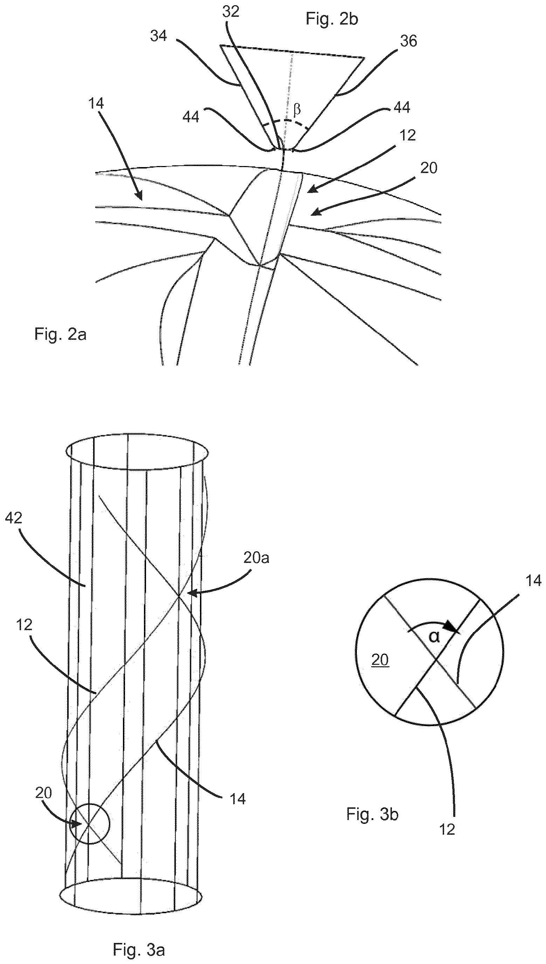

Fig. 2a zeigt eine Detaildarstellung des Bereichs 20, in dem zwei Nuten 12 und 14 zusammenlaufen. Hier sind die beiden Nuten dargestellt, die sich in dem Kreuzungsbereich 20 kreuzen. Genauer gesagt laufen die beiden Nuten hier in den Kreuzungsbereich ein, ohne sich hier wesentlich zu erweitern. Dies bedeutet, dass eine Nut hier im Wesentlichen nur durch den Querschnitt der jeweils anderen Nut unterbrochen wird.

Fig. 2b zeigt einen Querschnitt einer Nut. Man erkennt, dass dieser Querschnitt eine trapezförmige Gestalt hat. Dabei beziehen sich die Bezugszeichen 34 und 36 auf zwei seitliche Begrenzungswände der Nut, und das Bezugszeichen 32 auf einen Nutgrund. Dieser Nutgrund verläuft dabei geradlinig und geht über gekrümmte Ecken 44 in die beiden Seitenwände 34 und 36 über. Das Bezugszeichen β kennzeichnet einen Öffnungswinkel der besagten Nut. Dieser wird gegenüber einem geometrischen Schnittpunkt der beiden Seitenwände 34 und 36 (d.h. deren nicht gezeigter geometrischer Verlängerung) definiert.

Fig. 3a zeigt eine schematische Darstellung zur Veranschaulichung des spiralförmigen Verlaufs der Nuten 12 und 14. Diese Nuten bilden einen ersten Kreuzungsbereich 20 und einen weiteren Kreuzungsbereich 20a. Wie viele derartige Kreuzungsbereiche ausgebildet werden, hängt von mehreren Faktoren ab, wie insbesondere einer Höhe des Behältnisses oder auch einem Steigungswinkel der Nuten. Man erkannt jedenfalls, dass die Nuten 12 und 14 spiralförmig am Außenumfang 42 des Behältnisses 1 verlaufen.

Fig. 3b zeigt eine Detaildarstellung, nämlich den Kreuzungsbereich 20 zwischen den beiden Nuten 12 und 14. Dabei ist es möglich, dass der Rillengrund bzw. der Nutgrund über die Behältnishöhe variabel verläuft. Wie in Fig. 3 a gezeigt, sind wenigstens zwei derartige Nuten bzw. Leitkurven vorgesehen. Dabei können diese, wie oben erwähnt, eine konstante oder variable Steigung aufweisen. Weiterhin sind, wie erwähnt, eine Nut mit positiver Steigung und eine Nut mit negativer Steigung vorhanden, welche sich n-Mal kreuzen können. Der in Fig. 3b gezeigte Kreuzungsbereich 20 zeigt hier die beiden Nuten 12 und 14, die sich unter dem Winkel α schneiden.

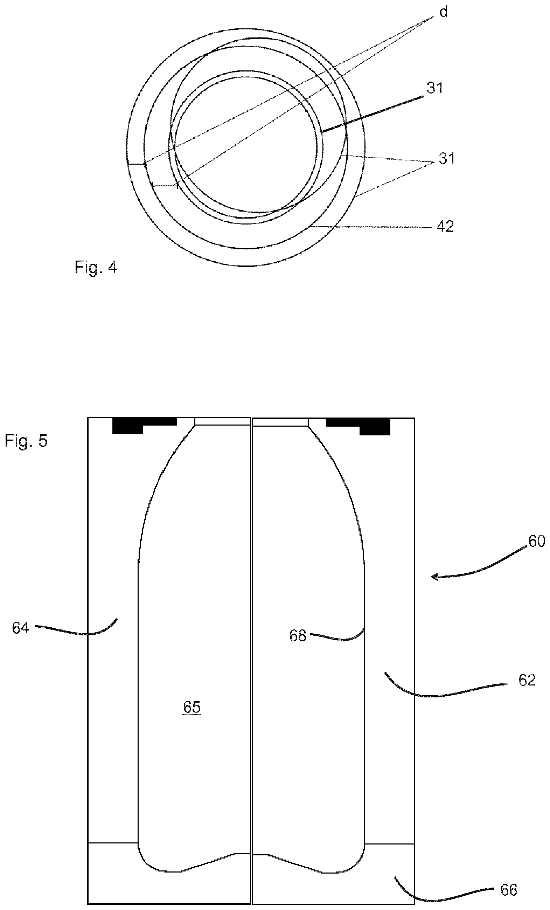

Fig. 4 zeigt eine weitere Darstellung bzw. eine Querschnittsdarstellung des Behältnisses. Dabei bezieht sich das Bezugszeichen 42 wiederum auf den Querschnitt (bzw. die Umfangswandung des Behältnisses selbst. Das Bezugszeichen 31 kennzeichnet zwei mögliche Verläufe einer Nut bzw. eines Rillengrundes. Dabei erkennt man, wie durch das Bezugszeichen d gekennzeichnet, dass variable Abstände d zwischen dem Behältnisquerschnitt und den jeweiligen Nutgründen bzw. Rillengründen vorhanden sind.

Fig. 5 zeigt eine Schnittdarstellung einer Blasform 60 zum Herstellen eines erfindungsgemäßen Behältnisses. Diese Blasform 60 weist eine erstes Seitenteil 62 und ein zweites Seitenteil 64 auf. Daneben weist die Blasform auch ein Bodenteil auf. Dieses Bodenteil 66 und die Seitenteile 62 und 64 bilden in einem geschlossenen Zustand der Blasform einen Hohlraum 65 aus, innerhalb dessen die Kunststoff-Vorformlinge zu den Kunststoff-Behältnissen expandiert werden können.

Das Bezugszeichen 68 kennzeichnet eine Innenwandung der Seitenteile. Diese kann dabei ebenfalls Nuten oder Erhebungen aufweisen und zwar der Gestalt, dass im Rahmen eines Blasvorgangs ein erfindungsgemäßes Behältnis bzw. beispielsweise das in Fig. 1 gezeigte Behältnis erzeugt bzw. geblasen werden kann.

### Bezugszeichenliste

- 1: Behältnis
- 2: Bodenbereich
- 4: Grundkörper
- 4a: Griffbereich des Grundkörpers 4
- 6: Mündungsbereich
- 8: Mündung
- 12: Nut
- 12a: Abschnitt der Nut
- 14: Nut
- 14a: Abschnitt der Nut
- 16: horizontale Nut
- 20, 20a: Kreuzungsbereich
- 22, 24: Bodennut, Zugband
- 26: Verzweigungspunkt, Verzweigungsbereich
- 31: Verläufe der Nut
- 32: Nutgrund
- 34, 36: Begrenzungswand der Nut
- 42: Umfangswandung des Grundkörpers
- 44: Ecken der Nut
- 60: Blasform
- 62: erstes Seitenteil
- 64: zweites Seitenteil
- 65: Hohlraum
- 66: Bodenteil
- 68: Innenwandung

- α: Kreuzungswinkel der Nuten 12, 14
- β: Öffnungswinkel der Nuten
- d: variable Abstände
- L: Längsrichtung des Behältnisses

## Patentansprüche

1. Kunststoffbehältnis (1) mit einem Bodenbereich (2), einem sich in einer Längsrichtung (L) des Kunststoffbehältnisses (1) an diesen Bodenbereich (2) anschließenden Grundkörper (4), wobei dieser Grundkörper eine in einer Umfangsrichtung des Kunststoffbehältnisses vollständig umlaufende Wandung aufweist, und einem sich in der Längsrichtung (L) an diesen Grundkörper (4) zumindest mittelbar anschließenden Mündungsbereich (6) mit einer Behältnismündung (8), wobei diese umlaufende Wandung des Grundkörper (4) wenigstens eine erste sich in einer ersten Richtung erstreckende Nut und/oder Erhebung (12) und wenigstens eine zweite sich in einer zweiten Richtung erstreckende Nut und/oder Erhebung (14) aufweist, wobei die erste Nut und/oder Erhebung und die zweite Nut und/oder Erhebung sich in wenigstens einem ersten in der umlaufenden Wandung ausgebildeten Kreuzungsbereich (20) kreuzen **dadurch gekennzeichnet, dass** in dem Bodenbereich (2) wenigstens zwei Bodennuten und/oder Bodenerhebungen (22, 24) angeordnet sind und wenigstens eine Bodennut und/oder Bodenerhebung in einem Verzweigungsbereich (26) in wenigstens zwei in der Umfangswandung ausgebildete Nuten und/oder Erhebungen (12, 14) übergeht.

2. Kunststoffbehältnis (1) nach Anspruch 1,
**dadurch gekennzeichnet, dass**
wenigstens eine Nut und/oder Erhebung einen durch den Kreuzungsbereich (20) verlaufenden Abschnitt (12a, 14a) aufweist und dieser Abschnitt (12a, 14a) sich im Wesentlichen geradlinig erstreckt.

3. Kunststoffbehältnis (1) nach einem der vorangegangenen Ansprüche, **dadurch gekennzeichnet, dass**
sich die erste Nut und/oder Erhebung (12) und die zweite Nut und/oder Erhebung (14) in dem Kreuzungsbereich unter einem vorgegebenen Kreuzungswinkel α kreuzen und dieser Kreuzungswinkel α größer ist als 0,1°, bevorzugt größer als 10°, bevorzugt größer als 20° und besonders bevorzugt größer als 30°.

4. Kunststoffbehältnis (1) nach einem der vorangegangenen Ansprüche, **dadurch gekennzeichnet, dass**
wenigstens eine Nut und/oder Erhebung in dem Kreuzungsbereich (20) durchgängig und/oder in den Kreuzungsbereich (20) einlaufend ausgebildet ist.

5. Kunststoffbehältnis (1) nach einem der vorangegangenen Ansprüche, **dadurch gekennzeichnet, dass**
wenigstens eine Nut und/oder Erhebung einen Öffnungswinkel (β) von mehr als 10°, bevorzugt von mehr als 20°, bevorzugt von mehr als 30°, bevorzugt von mehr als 40°, besonders bevorzugt von mehr als 50° und besonders bevorzugt von mehr als 60° aufweist.

6. Kunststoffbehältnis (1) nach einem der vorangegangenen Ansprüche, **dadurch gekennzeichnet, dass**
wenigstens eine Nut und/oder Erhebung einen Öffnungswinkel (β) von weniger als 170°, bevorzugt von weniger als 150°, bevorzugt von weniger als 130°, besonders bevorzugt von weniger als 110° ,besonders bevorzugt von weniger als 100°, besonders bevorzugt von weniger als 90° und besonders bevorzugt von weniger als 80° aufweist.

7. Kunststoffbehältnis (1) nach einem der vorangegangenen Ansprüche, **dadurch gekennzeichnet, dass**
wenigstens eine Nut einen geradlinigen Nutgrund (32) aufweist.

8. Kunststoffbehältnis (1) nach einem der vorangegangenen Ansprüche, **dadurch gekennzeichnet, dass**
das Kunststoffbehältnis wenigstens eine weitere Nut und/oder Erhebung in der Wandung aufweist, welche wenigstens einen Kreuzungsbereich mit der ersten und/oder der zweiten Nut und/oder Erhebung ausbildet.

9. Kunststoffbehältnis (1) nach einem der vorangegangenen Ansprüche, **dadurch gekennzeichnet, dass**
wenigstens eine Nut und/oder Erhebung sich wenigstens abschnittsweise spiralförmig um die Längsrichtung (L) des Behältnisses erstreckt.

10. Kunststoffbehältnis (1) nach einem der vorangegangenen Ansprüche, **dadurch gekennzeichnet, dass**
wenigstens ein Kreuzungsbereich als Mulde ausgebildet ist, in den die wenigstens eine Nut einläuft

11. Blasform (60) zum Herstellen von Kunststoffbehältnissen mit einem ersten Seitenteil (62) und einem zweiten Seitenteil (64), welche in einem zusammengesetzten Zustand der Blasform (60) wenigstens einen Hohlraum (65) umschließen, innerhalb dessen Kunststoffvorformlinge zu den Kunststoffbehältnissen ausgebildet werden können, wobei diese Blasform (60) eine formgebende Innenwandung zur Erzeugung der Wandung der Kunststoffbehältnisse aufweist,
**dadurch gekennzeichnet, dass**
die formgebende Innenwandung der Blasform (60) derart ausgebildet ist, dass sie zur Erzeugung eines Behältnisses (1) nach einem der vorangegangenen Ansprüche 1 - 10 geeignet ist.

## Claims

1. Plastics material container (1) with a base region (2), a main body (4) adjoining this base region (2) in a longitudinal direction (L) of the plastics material container (1), wherein this main body has a peripheral wall extending completely around in a peripheral direction of the plastics material container, and a mouth region (6) with a container mouth (8) following at least indirectly to this main body (4) in the longitudinal direction (L), wherein this peripheral wall of the main body (4) has at least one first groove and/or protrusion (12) extending in a first direction and at least one second groove and/or protrusion (14) extending in a second direction, wherein the first groove and/or protrusion and the second groove and/or protrusion intersect in at least one first intersection region (20) in the peripheral wall,
**characterised in that** at least two base grooves and/or base protrusions (22, 24) are arranged in the base region (2) and at least one base groove and/or base protrusion transitions in a branching region (26) into at least two grooves and/or protrusions (12, 14) formed in the peripheral wall.

2. Plastics material container (1) according to claim 1,
**characterised in that**
at least one groove and/or protrusion has a portion (12a, 14a) extending through the intersection region (20) and this portion (12a, 14a) extends substantially in a straight line.

3. Plastics material container (1) according to one of the preceding claims,
**characterised in that**
the first groove and/or protrusion (12) and the second grove and/or protrusion (14) intersect in the intersection region at a predetermined intersection angle α and this intersection angle α is greater than 0.1°, preferably greater than 10°, preferably greater than 20° and particularly preferably greater than 30°.

4. Plastics material container (1) according to one of the preceding claims,
**characterised in that**
at least one groove and/or protrusion is continuous in the intersection region (20) and/or is designed to run into the intersection region (20).

5. Plastics material container (1) according to one of the preceding claims,
**characterised in that**
at least one groove and/or protrusion has an aperture angle (β) of more than 10°, preferably more than 20°, preferably more than 30°, preferably more than 40°, particularly preferably more than 50° and particularly preferably more than 60°.

6. Plastics material container (1) according to one of the preceding claims,
**characterised in that**
at least one groove and/or protrusion has an aperture angle (β) of less than 170°, preferably less than 150°, preferably less than 130°, particularly preferably less than 110°, particularly preferably less than 100°, particularly preferably less than 90° and particularly preferably less than 80°.

7. Plastics material container (1) according to one of the preceding claims,
**characterised in that**
at least one groove has a straight groove base (32).

8. Plastics material container (1) according to one of the preceding claims,
**characterised in that**
the plastics material container has at least one further groove and/or protrusion in the wall which forms at least one intersection region with the first and/or the second groove and/or protrusion.

9. Plastics material container (1) according to one of the preceding claims,
**characterised in that**
at least one groove and/or protrusion extends at least in sections spirally around the longitudinal direction (L) of the container.

10. Plastics material container (1) according to one of the preceding claims,
**characterised in that**
at least one intersection region is formed as a depression into which the at least one groove runs.

11. Blow mould (60) for producing plastics material containers with a first side part (62) and a second side part (64), which in an assembled state of the blow mould (60) enclose at least one cavity (65), inside which plastics material parisons can be formed into the plastics material containers, wherein this blow mould (60) has a shaping inner wall for producing the wall of the plastics material containers,
**characterised in that**
the shaping internal wall of the blow mould (60) is formed in such a way that it is suitable for producing a container (1) according to one of the preceding claims 1 - 10.

## Revendications

1. Contenant en matière plastique (1) avec une zone de fond (2), un corps de base (4) se raccordant à cette zone de fond (2) dans une direction longitudinale (L) du contenant en matière plastique (1), dans lequel ce corps de base présente une paroi entièrement périphérique dans une direction circonférentielle du contenant en matière plastique, et une zone d'embouchure (6), avec une embouchure de contenant (8), se raccordant au moins indirectement à ce corps de base (4) dans la direction longitudinale (L), dans lequel cette paroi périphérique du corps de base (4) présente au moins une première rainure et/ou élévation (12) s'étendant dans une première direction et au moins une deuxième rainure et/ou élévation (14) s'étendant dans une deuxième direction, dans lequel la première rainure et/ou élévation et la deuxième rainure et/ou élévation se croisent dans au moins une première zone de croisement (20) réalisée dans la paroi périphérique,
**caractérisé en ce qu'**au moins deux rainures de fond et/ou élévations de fond (22, 24) sont disposées dans la zone de fond (2) et au moins une rainure de fond et/ou élévation de fond passe dans une zone de ramification (26) dans au moins deux rainures et/ou élévations (12, 14) réalisées dans la paroi périphérique.

2. Contenant en matière plastique (1) selon la revendication 1,
**caractérisé en ce que**
au moins une rainure et/ou élévation présente une partie (12a, 14a) s'étendant à travers la zone de croisement (20) et cette partie (12a, 14a) s'étend sensiblement en ligne droite.

3. Contenant en matière plastique (1) selon l'une quelconque des revendications précédentes,
**caractérisé en ce que**
la première rainure et/ou élévation (12) et la deuxième rainure et/ou élévation (14) se croisent dans la zone de croisement selon un angle de croisement α prédéfini et cet angle de croisement α est supérieur à 0,1°, de préférence supérieur à 10°, de préférence supérieur à 20° et de manière particulièrement préférée supérieur à 30°.

4. Contenant en matière plastique (1) selon l'une quelconque des revendications précédentes,
**caractérisé en ce que**
au moins une rainure et/ou élévation est réalisée sans interruption dans la zone de croisement (20) et/ou de manière à entrer dans la zone de croisement (20).

5. Contenant en matière plastique (1) selon l'une quelconque des revendications précédentes,
**caractérisé en ce que**
au moins une rainure et/ou élévation présente un angle d'ouverture (β) supérieur à 10°, de préférence supérieur à 20°, de préférence supérieur à 30°, de préférence supérieur à 40°, de manière particulièrement préférée supérieur à 50° et de manière particulièrement préférée supérieur à 60°.

6. Contenant en matière plastique (1) selon l'une quelconque des revendications précédentes,
**caractérisé en ce que**
au moins une rainure et/ou élévation présente un angle d'ouverture (β) inférieur à 170°, de préférence inférieur à 150°, de préférence inférieur à 130°, de manière particulièrement préférée inférieur à 110°, de manière particulièrement préférée inférieur à 100°, de manière particulièrement préférée inférieur à 90° et de manière particulièrement préférée inférieur à 80°.

7. Contenant en matière plastique (1) selon l'une quelconque des revendications précédentes,
**caractérisé en ce que**
au moins une rainure présente un fond de rainure (32) rectiligne.

8. Contenant en matière plastique (1) selon l'une quelconque des revendications précédentes,
**caractérisé en ce que**
le contenant en matière plastique présente au moins une autre rainure et/ou élévation dans la paroi, laquelle réalise au moins une zone de croisement avec la première et/ou la deuxième rainure et/ou élévation.

9. Contenant en matière plastique (1) selon l'une quelconque des revendications précédentes,
**caractérisé en ce que**
au moins une rainure et/ou élévation s'étend au moins en partie en spirale autour de la direction longitudinale (L) du contenant.

10. Contenant en matière plastique (1) selon l'une quelconque des revendications précédentes,
**caractérisé en ce que**
au moins une zone de croisement est réalisée sous la forme d'un creux dans lequel la au moins une rainure entre.

11. Moule de soufflage (60) pour la fabrication de contenants en matière plastique avec une première partie latérale (62) et une deuxième partie latérale (64), lesquelles, dans un état assemblé du moule de soufflage (60), entourent au moins une cavité (65) à l'intérieur de laquelle des préformes en matière plastique peuvent être transformées en contenants en matière plastique, dans lequel ce moule de soufflage (60) présente une paroi intérieure de façonnage pour la production de la paroi des contenants en matière plastique,
**caractérisé en ce que**
la paroi intérieure de façonnage du moule de soufflage (60) est réalisée de telle sorte qu'elle est adaptée à produire un contenant (1) selon l'une quelconque des revendications précédentes 1 à 10.
